# EUROPEAN PATENT SPECIFICATION

(11) **EP 1 945 872 B1**
(45) Date of publication and mention of the grant of the patent: **10.06.2020**
(21) Application number: 06801542.9
(22) Date of filing: 15.08.2006
(51) Int. Cl.: E04B 1/86, B32B 5/14, D21H 13/40, D21H 19/66, E04F 13/08, E04B 9/04

(54) **CEILING TILE WITH NON UNIFORM BINDER COMPOSITION**
DECKENPLATTE MIT NICHT GLEICHFÖRMIGER BINDEMITTELZUSAMMENSETZUNG
DALLE DE PLAFOND PRESENTANTUNE COMPOSITION DE LIANT NON UNIFORME

(30) Priority: 15.09.2005 US 227014
(43) Date of publication of application: 23.07.2008
(73) Proprietor: USG Interiors, LLC, Chicago, IL 60661-3676 (US)
(72) Inventor: BAIG, Mirza A., IL 60046 (US); SCHMITT, William A., MN 55803 (US)
(74) Representative: Findlay, Alice Rosemary
(86) International application number: PCT/US2006/031857
(87) International publication number: WO 2007/037820

(56) References cited:
- US-A- 3 955 031
- US-A1- 2004 209 071
- US-A1- 2004 209 071

## Description

The invention relates to ceiling tile and, more specifically, to a tile construction that provides improved durability and reduction in manufacturing costs by strategic non-uniform distribution of latex binder through the thickness of the tile.

### BACKGROUND OF THE INVENTION

Ceiling tile is frequently manufactured using a felting process to construct a tile or board from a water- based slurry. The slurry, typically, includes a homogeneous mix of all of the raw materials that make up the body proper of the tile. Layers of felted slurry material are pressed into a mat and dried to form a board. Some tiles are constructed from boards that are embossed or patterned before they are completely dry, while others are made from boards that are first dried and then ground to obtain a desired thickness and a smooth finish. Typically, the raw materials include a binder such as latex or starch or a combination of the two that serves to hold the other materials together when the board is dried. Ordinarily, the binder represents a small percentage of the total weight of the board but represents a disproportionately high part of the cost of the materials. The binder content affects board strength and surface hardness. Conventionally, a level of binder content is maintained in the slurry mix to achieve a satisfactory surface hardness and, therefore, acceptable durability.

US2004/0209071 discloses a panel with a core which comprises the dried product of a slurry of fillers, binders and water. Zinc pyrithione is present in at least one of the core and a coating applied to at least one of the surfaces of the core.

### SUMMARY OF THE INVENTION

The invention is defined by the claims.

The invention provides a ceiling tile construction in which binder material has a non-uniform distribution across the thickness of the tile with a relatively high concentration near the finished or visible face of the tile. The disclosed distribution of binder can reduce manufacturing costs while providing a tile with a satisfactory or even superior surface hardness and durability as well as improved noise absorption capability. The tile of the invention can be made by reducing the binder content in the slurry or mix of material to below heretofore standard formulations and, after the mat or tile board is at least preliminarily formed, including on the side of the mat associated with the future visible face of the tile a layer of supplemental water-based latex binder. The coated binder, preferably, is the same material used in the slurry formulation to fix or cement the other materials making up the tile board. The enhanced binder zone at the visible side of the tile can increase the hardness and strength of the product at this side while allowing total binder content to be reduced, reduce final finish coat or paint requirements and increase sound absorption.

### DESCRIPTION OF THE PREFERRED EMBODIMENT

The invention comprises mineral wool-based ceiling tile that, in part, is made in a traditional water felting process. In the context of the present invention, the slurry solids typically contain roughly 90% mineral wool and the remainder of solids primarily comprise binder in the form of latex or latex and starch. All together, the solids in the slurry are about 5% of the total weight of the slurry; i.e. a consistency of 5%. Latex is well-known and widely used commercially as a binder. Normally, the latex is disbursed as a water emulsion and coalesces into a solid when the water is driven off. Various formulations for the slurry can be used as desired or necessary. Generally, the following table gives an approximate range of slurry constituents by weight percentage of total solids:

| | |
|---|---|
| mineral wool | 75 - 95% |
| perlite | 0 - 15% |
| cellulose fiber | 0 - 10%. |
| binder (starch) | 0 - 5% |
| binder (latex) | 0 - 10% |
| binder (total) | 5 - 12% |

In the felting process, the slurry is deposited on a moving screen and, typically, is dried by gravity, pressure rolls, vacuum, and heat. The solids in the slurry are generally uniformly mixed and distributed and generally remain or are intended to remain in this state as the mat is formed on the screen and is progressively dried. Preferably, the latex used in the slurry is a high Tg binder material cured at relatively high temperature, for example, by exposing the mat to hot air (for example at about 350° F) and/or infrared heating. A low Tg binder can be used where it provides sufficient strength and hardness of the core.

The invention comprehends a process and article in which the binder distribution across the thickness of the mat is modified so that a greater concentration of the binder exists adjacent the face or ultimate room side of the ceiling tile. It has been discovered that in practicing the invention, the durability of the ceiling tile, its noise reduction coefficient (NRC) and its finish paint requirements can all be improved even while reducing its total binder content and, therefore, reducing its cost of manufacture.

The increased concentration of latex binder at a latex binder enhancement zone, can be produced by conventional coating techniques such as by spraying, roll-coating, flood coating and the like. The binder enhancement zone, when made by a coating process, can be coated before, during, or after the slurry formed mat is dried and/or cured. Prior partial or full curing of the mat can reduce or prevent free migration of the binder material being applied to form the enhancement zone at the face side of the mat. The latex binder in the enhancement zone is typically cured by drying it from its water carrier by exposure to relatively high temperature air, e.g. about 350° F.

The slurry binder can wholly comprise starch or, more preferably, is used in an amount, for example, roughly equal by weight to the latex content. The latex binder enhancement zone or layer preferably uses the same latex material as used in the slurry but, if desired, can be different. The enhancement layer can be applied after the mat is fully cured and can be applied, if the mat or board is to be ground or sanded, after such grinding or sanding.

The latex enhancement zone can reduce manufacturing costs of the tile by allowing the latex content of the slurry to be reduced from that of conventional formulations. With the invention, the effective surface hardness of the face of the finished tile can be even higher than prior art products while the total or net latex usage is less than in such prior art products. The effective hardness of the tile face is measured through any finish material or paint coated and cured on the tile. The increased hardness of the outer face region, either on an absolute basis or as a comparison to prior art product, is reflected in a higher durability of the ceiling tile when it is being handled during installation or during its service life.

The latex enhancement zone is substantially more concentrated on the basis, for instance, of grams per unit of thickness than the remainder of the mat. By way of example, if the slurry carried latex binder content is about 4 or 5% of the weight of the mat distributed over the thickness of the mat proper, the enhancement zone, coated onto the top of the mat, can be about 1% of the total mat weight. Stated otherwise, in this example approximately 1/4 to 1/5 of the latex binder content of the finished tile exists at one side of the mat when the latex binder enhancement zone is developed by a coating process. Ordinarily, the top side of the felted mat will be the side made with the supplemental latex binder enhancement zone since, in conventional felting or processing, this is the side which is most accessible. The zone is easily developed on the top of the mat by spraying, roll-coating or the like on the mat production line. When the latex enhanced zone is created by a separate coating process, the latex material used, as mentioned, is preferably the same as used in forming the mat slurry. This commonality affords convenience and cost savings through attendant purchasing, inventory and familiarity.

Ceiling tile of the type under consideration here is normally coated or painted to achieve a color that approaches a true white. This coating typically involves a primer coat and a finish coat of a formulation of a paint type latex with a fast low temperature cure. The invention enables the tile to be coated with less paint while achieving the same or improved whiteness. This effect results from the high concentration of latex binder present in the enhancement zone at the outer surface of the mat made under the principles of the invention which latex binder has a color closer to white than the color of natural mineral wool. The paint required on the face of the dried tile mat or board proper to hide the considerably off-white color of the mineral wool is reduced.

It has been found that the ceiling tile made in accordance with the invention can also exhibit improved sound absorption sometimes technically referenced as noise reduction coefficient (NRC). This phenomena is believed to be the result of using less paint or coating which, apparently, causes less net blocking of the porous surface of the mat and, therefore, promotes greater sound absorption.

The following table sets out an example of a solids formulation of a conventional prior art tile identified by the label AControl@ and an example of a formulation of a tile of the invention identified by the label ATrial@.

**Formulation/Construction:**

| | Wool % | Starch % | Latex in Core % | Latex Spray % | Total Latex % |
|---|---|---|---|---|---|
| Control | 92.3 | 3.0 | 6.7 | 0.0 | 6.7 |
| Trial | 92.3 | 3.0 | 4.7 | 1.0 | 5.7 |

Tiles of both formulations/constructions (Control) and (Trial) were tested with the following results:

### Coating Coverage, Lab Value and Estimated NRC Value:

**Test Run 1**

| Test No. | Primary, GMs/SF | Finish, Gms/SF | Total Ctg,GM/SF | L | Lab Values a. | b. | Estimated NRC |
|---|---|---|---|---|---|---|---|
| Control | 20.0 | 20.0 | 40.0 | 93.69 | -0.19 | 3.87 | 0.67 |
| Trial 1 | 0.0 | 22.0 | 22.0 | 82.62 | 0.66 | 8.7 | 0.68 |
| Trial 2 | 11.0 | 20.0 | 31.0 | 90.11 | 0.02 | 4.35 | 0.72 |
| Trial 3 | 10.0 | 10.0 | 20.0 | 87.56 | 0.09 | 5.04 | 0.70 |
| Trial 4 | 20.0 | 20.0 | 40.0 | 94.84 | -0.24 | 2.84 | 0.68 |

**Test Run 2**

| Test No. | Primary, Gms/SF | Finish, Gms/SF | Total Ctg,GM/SF | L | Lab Values a. | b. | Estimated NRC |
|---|---|---|---|---|---|---|---|
| Control | 20.0 | 20.0 | 40.0 | 92.48 | 0.02 | 4.15 | 0.69 |
| Trial 1 | 0.0 | 30.0 | 30.0 | 89.52 | 0.0 | 4.23 | 0.72 |
| Trial 2 | 20.0 | 15.0 | 35.0 | 91.07 | -0.15 | 3.78 | 0.73 |
| Trial 3 | 25.0 | 10.0 | 35.0 | 90.49 | -0.15 | 4.22 | 0.74 |
| Trial 4 | 0.0 | 26 | 26.0 | 87.81 | -0.2 | 6.83 | 0.74 |
| Trial 5 | 0.0 | 30.0 | 30.0 | 88.14 | -0.14 | 6.92 | 0.74 |
| Trial 6 | 35.0 | 0.0 | 35.0 | 86.84 | 0.55 | 7.84 | 0.67 |

**Test Run 3**

| Test No. | Primary, GMs/SF | Finish, Gms/SF | Total Ctg,GM/SF | L | Lab Values a. | b. | Estimated NRC |
|---|---|---|---|---|---|---|---|
| Control | 20.4 | 21.3 | 41.7 | 93.86 | - .20 | 3.54 | 0.69 |
| Trial 1 | 20.6 | 16.3 | 36.9 | 92.30 | -0.12 | 3.34 | 0.74 |
| Trial 2 | 20.6 | 18.0 | 38.6 | 92.83 | -0.11 | 3.06 | 0.73 |
| Trial 3 | 24.5 | 15.0 | 39.5 | 93.10 | -0.12 | 3.01 | 0.73 |
| Trial 4 | 0.0 | 33.0 | 33.0 | 91.78 | -0.19 | 3.71 | 0.67 |
| Trial 5 | 0.0 | 40.0 | 40.0 | 94.22 | -0.28 | 3.33 | 0.70 |
| Trial 6 | 20.4 | 21.3 | 41.7 | 93.88 | -0.26 | 2.93 | 0.73 |

### Physical Data:

**Test Run 1**

| | Weight, LB/MSF | Caliper, inch | Density, LB/CF | HunterG, Hrdn=s |
|---|---|---|---|---|
| Control | 1044 | 0.717 | 17.5 | 1.75 |
| Trial 1 | 1032 | 0.726 | 17.1 | 2.0 |
| Trial 2 | 1055 | 0.732 | 17.3 | 2.25 |
| Trial 4 | 1086 | 0.738 | 17.7 | 2.5 |

**Test Run 2**

| | Weight, LB/MSF | Caliper, inch | Density, LB/CF | HunterG, Hrdn=s |
|---|---|---|---|---|
| Trial 1 | 1061 | 0.733 | 17.4 | 2.0 |
| Trial 2 | 1063 | 0.730 | 17.5 | 2.25 |
| Trial 3 | 1072 | 0.733 | 17.5 | 2.5 |
| Trial 4 | 1059 | 0.729 | 17.4 | 2.25 |
| Trial 5 | 1060 | 0.734 | 17.3 | 2.0 |
| Trial 6 | 1069 | 0.729 | 17.6 | 3.0 |

**Test Run 3**

| | Weight, LB/MSF | Caliper, inch | Density, LB/CF | HunterG, Hrdn=s |
|---|---|---|---|---|
| Control | 1035 | 0.710 | 17.5 | 1.75 |
| Trial 1 | 1053 | 0.726 | 17.4 | 2.0 |
| Trial 2 | 1064 | 0.734 | 17.4 | 2.0 |
| Trial 3 | 1089 | 0.730 | 17.9 | 2.25 |
| Trial 4 | 1045 | 0.725 | 17.3 | 2.0 |
| Trial 5 | 1071 | 0.730 | 17.6 | 2.0 |
| Trial 6 | 1061 | 0.732 | 17.4 | 2.0 |

Trial 1, Trial 2 etc. are separate samples of the inventive formulation/constructions.

The tiles (Trial) made according to the invention were coated with finishing material (a latex-based paint) in various quantities of a primer coat and/or a finish coat. Paint grade latex is readily distinguishable on a mechanical strength basis and on an abrasion-resistance basis from a binder type latex material.

Study of the values recorded in the above tables reveals that ceiling tiles fabricated with a latex enhancement zone on the face of the mat according to the invention but with less total latex content can be whiter, capable of greater noise reduction, and more durable than tiles with a conventional formulation (Control).

A Hunter gauge (the source of the HunterG Hrdn=s values) is a device used commercially to measure the surface hardness of materials such as wallboard. In general, the higher the Hunter gauge reading, the harder the surface of a product and the greater its durability.

The values L, a, b, are references to a color space method of evaluating the color of a surface wherein pure white is assigned the value of 100 and the lower the absolute value of the a, b values, the less deviation from white to primary colors. The greater the number recorded for NRC, the more a board is capable.of absorbing sound.

Other methods can be developed to produce a latex enhancement zone in a ceiling tile mat besides those disclosed herein. For example, it is envisioned that such a zone can be developed in the felting process adjacent the screen by purposely allowing the latex to settle out or by depositing a high latex content onto the screen prior to the formation of the mat proper. Typically, a tile made in accordance with the invention will have a caliper of between about 1/2 to about 7/8" and will have a relatively porous interior.

It should be evident that this disclosure is by way of example and that various changes may be made by adding, modifying or eliminating details.

## Claims

1. A method of making a mineral wool based ceiling tile comprising mixing a quantity of mineral wool and binder in proportions where the quantity of mineral wool on a weight basis is substantially greater than the quantity of binder and to a degree where the binder is generally uniformly distributed over the mineral wool, and forming a mat from the mineral wool and binder in the uniformly mixed condition, curing the binder so as to rigidify the mineral wool in a manner that the resulting mass of material is relatively porous, **characterised by** and forming a zone of enhanced binder content at one side of the mat where the binder content per unit thickness is substantially greater than the binder content per unit thickness throughout the majority of the thickness of the mat, wherein approximately 1/5 to 1/4 of the total binder content is at said side of the mat in the binder enhancement zone whereby the hardness of the mat at the surface of said enhanced binder zone is greater than that which would be produced at a mat surface formed by the binder content existing through the majority of the thickness of the mat.

2. A method as set forth in claim 1, wherein the binder used for the binder enhancement zone is latex and is the same as at least some of the binder mixed with the mineral wool to make the mat.

3. A method as set forth in claim 2, wherein the enhanced binder zone is made by coating the mat with said binder.

4. A method as set forth in claim 3, wherein said coating of the mat by the binder is accomplished by spraying said binder onto said mat.

5. A method as set forth in claim 3, wherein the binder coat is formed on said mat by roll coating said binder onto said mat.

6. A method as set forth in claim 1, wherein the enhanced binder zone is coated with a finishing material to bring its color close to pure white.

7. A ceiling tile comprising a base mat formed from a water slurry of uniformly mixed mineral wool and binder, the mineral wool forming the majority of the weight of the tile, the mat having a relatively low density and being relatively porous, **characterised by** a binder enhancement zone on a face side of the mat formed as a coat on the body of mineral wool and binder from the slurry, the concentration of binder per unit thickness in the binder enhancement zone being substantially greater than the concentration of binder in the mat per unit thickness, wherein approximately 1/5 to 1/4 of the total binder content is at said side of the mat in the binder enhancement zone.

8. A ceiling tile as set forth in claim 7, wherein the binder coated on the mat is the same as binder material mixed in the slurry to form said mat.

9. A ceiling tile as set forth in claim 7, wherein the binder enhancement zone is coated with a material to color the tile towards white.

10. A ceiling tile as set forth in claim 7, wherein the binder in the binder enhancement zone is a high Tg binder type latex.

11. A ceiling tile as set forth in claim 7 wherein the base mat is a slurry formed mat of a nominal thickness of between about 1/2 inch and about 3/4 inch and having at least 75% mineral wool content and 3% binder by weight.

12. A ceiling tile as set forth in claim 7, wherein the binder enhancement zone is covered with a paint-type coating that is closer in color to a pure white than the color exhibited by the binder enhancement zone.

13. A ceiling tile as set forth in claim 8, wherein the binder enhancement zone includes a latex binder and is closer to a pure white in its color than the color of a main portion of the mat whereby less paint type coating is necessary to obtain a desired level of white color at the face of the tile than would be required if the binder enhancement zone was omitted and the paint type coating was applied to a face of the mat.

## Patentansprüche

1. Verfahren zum Herstellen einer Deckenplatte auf Mineralwollebasis, umfassend das Mischen einer Menge von Mineralwolle und Bindemittel in Verhältnissen, wobei die Menge an Mineralwolle, auf einer Gewichtsbasis, wesentlich größer ist als die Menge an Bindemittel und wobei, bis zu einem gewissen Grad, das Bindemittel allgemein gleichförmig über die Mineralwolle verteilt ist, und Bilden einer Matte aus der Mineralwolle und dem Bindemittel in dem gleichförmig gemischten Zustand, Aushärten des Bindemittels, um die Mineralwolle auf eine Art und Weise zu verfestigen,
dass die resultierende Materialmasse relativ porös ist, **gekennzeichnet durch** Bilden einer Zone von erhöhtem Bindemittelgehalt auf einer Seite der Matte, wobei der Bindemittelgehalt pro Einheitsdicke wesentlich höher ist als der Bindemittelgehalt pro Einheitsdicke durch den Hauptteil der Dicke der Matte hindurch, wobei etwa 1/5 bis 1/4 des gesamten Bindemittelgehalts sich auf der Seite der Matte in der Bindemittelerhöhungszone befindet, wodurch die Härte der Matte an der Oberfläche der erhöhten Bindemittelzone höher als diejenige ist, die an einer Matteoberfläche erzeugt werden würde, die durch den Bindemittelgehalt gebildet wird, der durch den Hauptteil der Dicke der Matte hindurch besteht.

2. Verfahren wie in Anspruch 1 aufgeführt, wobei das für die Bindemittelerhöhungszone verwendete Bindemittel Latex ist und dasselbe ist wie mindestens ein Teil des Bindemittels, das mit der Mineralwolle zum Herstellen der Matte gemischt wird.

3. Verfahren wie in Anspruch 2 aufgeführt, wobei die Zone von erhöhtem Bindemittel durch Beschichten der Matte mit dem Bindemittel hergestellt wird.

4. Verfahren wie in Anspruch 3 aufgeführt, wobei die Beschichtung der Matte durch das Bindemittel durch Sprühen des Bindemittels auf die Matte erreicht wird.

5. Verfahren wie in Anspruch 3 aufgeführt, wobei der Bindemittelbelag auf der Matte durch Walzenauftrag des Bindemittels auf die Matte gebildet wird.

6. Verfahren wie in Anspruch 1 aufgeführt, wobei die Zone von erhöhtem Bindemittel mit einem Endfertigungsmaterial beschichtet wird, um ihre Farbe in die Nähe von reinem Weiß zu bringen.

7. Deckenplatte umfassend eine Grundmatte, die aus einer Wasseraufschlämmung von gleichförmig gemischter Mineralwolle und Bindemittel gebildet wird, wobei die Mineralwolle den Hauptteil des Gewichts der Platte bildet, wobei die Matte eine relativ niedrige Dichte aufweist und relativ porös ist, **gekennzeichnet durch** eine Bindemittelerhöhungszone auf einer Stirnseite der Matte, die als Belag auf dem Körper von Mineralwolle und Bindemittel aus der Aufschlämmung gebildet ist, wobei die Konzentration von Bindemittel pro Einheitsdicke in der Bindemittelerhöhungszone wesentlich höher ist als die Konzentration von Bindemittel in der Matte pro Einheitsdicke, wobei etwa 1/5 bis 1/4 des gesamten Bindemittelgehalts sich auf der Seite der Matte in der Bindemittelerhöhungszone befindet.

8. Deckenplatte wie in Anspruch 7 aufgeführt, wobei das auf die Matte aufgebrachte Bindemittel dasselbe ist wie das Bindemittelmaterial, das in die Aufschlämmung zum Bilden der Matte gemischt ist.

9. Deckenplatte wie in Anspruch 7 aufgeführt, wobei die Bindemittelerhöhungszone mit einem Material zum Färben der Platte auf Weiß hin beschichtet ist.

10. Deckenplatte wie in Anspruch 7 aufgeführt, wobei das Bindemittel in der Bindemittelerhöhungszone ein Latex vom Bindemitteltyp mit hoher Tg ist.

11. Deckenplatte wie in Anspruch 7 aufgeführt, wobei die Grundmatte eine aufschlämmungsgebildete Matte einer Nenndicke zwischen etwa 1/2 Zoll und etwa 3/4 Zoll ist und einen Mineralwollegehalt von mindestens 75 % und 3 % Bindemittel, auf das Gewicht bezogen, aufweist.

12. Deckenplatte wie in Anspruch 7 aufgeführt, wobei die Bindemittelerhöhungszone mit einer Beschichtung vom Anstrichmitteltyp bedeckt ist, die bezüglich der Farbe reinem Weiß näher ist als die Farbe, die die Bindemittelerhöhungszone aufweist.

13. Deckenplatte wie in Anspruch 8 aufgeführt, wobei die Bindemittelerhöhungszone ein Latexbindemittel umfasst und bezüglich ihrer Farbe reinem Weiß näher ist als die Farbe eines Hauptteils der Matte, worin weniger Beschichtung vom Anstrichmitteltyp erforderlich ist, um ein erwünschtes Niveau weißer Farbe auf der Stirnseite der Platte zu erhalten als erforderlich wäre, wenn die Bindemittelerhöhungszone weggelassen werden würde und die Beschichtung vom Anstrichmitteltyp auf eine Stirnseite der Matte aufgebracht werden würde.

## Revendications

1. Procédé de fabrication d'une dalle de plafond à base de laine minérale comprenant le mélange d'une quantité de laine minérale et de liant en des proportions où la quantité de laine minérale sur une base en poids est sensiblement supérieure à la quantité de liant et jusqu'à un degré où le liant est, d'une manière générale, uniformément réparti sur la laine minérale, et la formation d'un tapis à partir de la laine minérale et du liant à l'état uniformément mélangé, le durcissement du liant pour rigidifier la laine minérale de manière à ce que
la masse résultante du matériau soit relativement poreuse, **caractérisé par** la formation d'une zone de teneur augmentée en liant sur un côté du tapis où la teneur en liant par épaisseur unitaire est sensiblement supérieure à la teneur en liant par épaisseur unitaire à travers la majorité de l'épaisseur du tapis, approximativement 1/5 à 1/4 de la teneur totale en liant se trouvant au niveau dudit côté du tapis dans la zone augmentée en liant moyennant quoi la dureté du tapis à la surface de ladite zone augmentée en liant est supérieure à celle qui serait produite au niveau d'une surface du tapis formée par la teneur en liant existant à travers la majorité de l'épaisseur du tapis.

2. Procédé tel qu'exposé selon la revendication 1, le liant utilisé pour la zone augmentée en liant étant le latex et étant identique à au moins une partie du liant mélangée à la laine minérale pour fabriquer le tapis.

3. Procédé tel qu'exposé selon la revendication 2, la zone augmentée en liant étant fabriquée par revêtement du tapis avec ledit liant.

4. Procédé tel qu'exposé selon la revendication 3, ledit revêtement du tapis par le liant étant accompli par pulvérisation dudit liant sur ledit tapis.

5. Procédé tel qu'exposé selon la revendication 3, le revêtement de liant étant formé sur ledit tapis par revêtement au rouleau dudit liant sur ledit tapis.

6. Procédé tel qu'exposé selon la revendication 1, la zone augmentée en liant étant enduite d'un matériau de finition pour rapprocher sa couleur du blanc pur.

7. Dalle de plafond comprenant un tapis de base formé d'une suspension aqueuse de laine minérale et de liant uniformément mélangés, la laine minérale formant la majorité du poids de la dalle, le tapis ayant une densité relativement faible et étant relativement poreux, **caractérisée par** une zone augmentée en liant sur une face avant du tapis formée comme revêtement sur le corps de la laine minérale et du liant à partir de la suspension, la concentration du liant par épaisseur unitaire dans la zone augmentée en liant étant sensiblement supérieure à la concentration du liant dans le tapis par épaisseur unitaire, approximativement 1/5 à 1/4 de la teneur totale en liant se trouvant au niveau dudit côté du tapis dans la zone augmentée en liant.

8. Dalle de plafond telle qu'exposée selon la revendication 7, le liant recouvrant le tapis étant le même que le matériau liant mélangé dans la suspension pour former ledit tapis.

9. Dalle de plafond telle qu'exposée selon la revendication 7, la zone augmentée en liant étant revêtue d'un matériau pour colorer la dalle vers le blanc.

10. Dalle de plafond telle qu'exposée selon la revendication 7, le liant dans la zone augmentée en liant étant un latex à Tg élevée de type liant.

11. Dalle de plafond telle qu'exposée selon la revendication 7, le tapis de base étant un tapis formé par suspension, d'une épaisseur nominale comprise entre environ 1/2 de pouce et environ 3/4 de pouce et ayant au moins 75 % de teneur en laine minérale et 3 % de liant en poids.

12. Dalle de plafond telle qu'exposée selon la revendication 7, la zone augmentée en liant étant recouverte d'un revêtement type peinture qui est d'une couleur plus proche du blanc pur que la couleur présentée par la zone augmentée en liant.

13. Dalle de plafond telle qu'exposée selon la revendication 8, la zone augmentée en liant comprenant un liant latex et étant plus proche du blanc pur dans sa couleur que la couleur d'une partie principale du tapis moyennant quoi moins de revêtement de type peinture est nécessaire pour obtenir un niveau souhaité de couleur blanche au niveau de la face de la dalle que ce qui pourrait être requis si la zone augmentée en liant était omise et que le revêtement de type peinture était appliqué à une face du tapis.
